# EUROPÄISCHE PATENTANMELDUNG

(11) **EP 1 063 112 A2**
(43) Veröffentlichungstag der Anmeldung: **27.12.2000**
(21) Anmeldenummer: 00112280.3
(22) Anmeldetag: 08.06.2000
(51) Int. Cl.: B60J 7/02

(54) **Dachsystem für ein Fahrzeug**

(30) Priorität: 26.06.1999 DE 19929324
(71) Anmelder: CTS Fahrzeug-Dachsysteme GmbH, 21079 Hamburg (DE)
(72) Erfinder: Salz, Wolfram, 71665 Vaihingen/Enz (DE)
(74) Vertreter: Müller, Gottfried

(57) **Zusammenfassung**

Ein Dachsystem für ein Fahrzeug weist zumindest zwei benachbarte, in einer Dachöffnung angeordnete Dachelemente auf, die zwischen einer Schließstellung und einer Öffnungsstellung verstellbar gehalten sind.

Um ein einfach aufgebautes Dachsystem zu schaffen, ist vorgesehen, daß auf der dem Fahrzeuginnenraum abgewandten Außenseite eine die Dachelemente überspannende, faltbare Außenhaut aus wasserabweisendem Material angeordnet ist.

## Beschreibung

Die Erfindung bezieht sich auf ein Dachsystem für ein Fahrzeug nach dem Oberbegriff des Anspruches 1.

Es sind eine Vielzahl verschiedenartiger Dachsysteme bekannt, die zwischen einer Schließstellung, in der der Fahrzeuginnenraum überdeckt ist, und einer Öffnungsstellung verstellbar ausgebildet sind. Ein typischer Vertreter eines als Faltdach ausgebildeten Dachsystems mit einem kinematisch verstellbaren Verdeckgestänge und einem vom Verdeckgestänge getragenen Verdeckstoff ist beispielsweise in der Druckschrift DE 43 27 729 C2 veröffentlicht worden. Gemäß dieser Druckschrift sind das Verdeckgestänge und der Verdeckstoff in Öffnungsstellung in einer hinter den Sitzen angeordneten Ablage verstaut. Derartige Cabrioletfahrzeuge benötigen eine komplizierte Verstellkinematik, um das Faltdach zwischen Öffnungs- und Schließstellung verstellen zu können. Außerdem ist es aus Sicherheitsgründen nicht möglich, das Verdeck während der Fahrt zu öffnen oder zu schließen.

Ein mit der DE 43 27 729 C2 vergleichbarer Stand der Technik ist auch den Druckschriften DE 44 11 387 A1 und DE 43 19 718 C1 zu entnehmen.

Darüber hinaus sind auch Schiebedächer für Kraftfahrzeuge bekannt geworden, beispielsweise aus der DE 197 20 000 C1, die eine Mehrzahl von in Fahrzeuglängsrichtung hintereinander angeordneten und verschiebbaren sowie schräg ausstellbaren Lamellen aufweisen. Auf der dem Fahrzeuginnenraum zugewandten Unterseite der Lamellen ist ein faltbarer Innenhimmel befestigt, der zusammen mit den Lamellen verschiebbar ist, so daß in Öffnungsstellung ein Großteil der Dachöffnung vollständig freigegeben ist. Dem Innenhimmel kommt neben Dämmungseigenschaften eine ästhetische Funktion zu, um den Fahrzeuginnenraum einheitlich gestalten zu können. Darüber hinaus übernimmt der Innenhimmel auch eine technische Funktion, indem in Öffnungsstellung des Fahrzeugdaches die unterhalb der Lamellen gebildeten Falten des Innenhimmels als Wasserrinne zur Abführung von Wasser genutzt werden, welches durch den Zwischenraum benachbarter Lamellen in Öffnungsstellung herabtropft. Der Innenhimmel muß daher aus einem wasserabweisenden Material bestehen, wodurch man Einschränkungen bei der Auswahl des Innenhimmels unterworfen ist, insbesondere im Hinblick auf die optische Gestaltung des Innenhimmels.

Ein weitere Nachteil derartiger Lamellendächer ist darin zu sehen, daß aufgrund der verhältnismäßig hohen Anzahl an Lamellen eine Vielzahl von Dichtungen zwischen benachbarten Lamellen erforderlich ist, um das Verdeck in Schließstellung wasserdicht ausbilden zu können. Andererseits haben derartige Lamellendächer den Vorteil, daß sie auch während der Fahrt von Schließin Öffnungsstellung bzw. umgekehrt überführt werden können. Lamellendächer sind darüberhinaus stabiler und sicherer als Faltdächer.

Der Erfindung liegt das Problem zugrunde, ein einfach aufgebautes und wasserdichtes, öffnungsfähiges Dachsystem für ein Fahrzeug zu schaffen, das ein hohes Maß an Gestaltungsmöglichkeiten erlaubt.

Dieses Problem wird erfindungsgemäß mit den Merkmalen des Anspruches 1 gelöst. Vorteile und zweckmäßige Ausführungsformen sind den weiteren Ansprüchen zu entnehmen. Es zeigen:

Die die Dachelemente überspannende Außenhaut aus wasserabweisendem Material überdeckt sämtliche Zwischenräume zwischen benachbarten Dachelementen, so daß auf Dichtungen zwischen angrenzenden Dachelementen verzichtet werden kann. Die Dachöffnung ist in Schließstellung des Dachsystems zumindest über die Fläche der Außenhaut vollständig wasserdicht nach außen abgeschottet.

Da nunmehr Dichtungen zwischen benachbarten Dachelementen nicht mehr benötigt werden, kann in Schließstellung ein Spaltmaß zwischen den Dachelementen erlaubt sein, wodurch sich die Konstruktion und die Fertigung des Dachsystems erheblich vereinfacht, ohne die Dichtigkeit oder die Stabilität des Daches zu beeinträchtigen.

Da die Dachöffnung in Schließstellung zweckmäßig vollständig von den stabilen Dachelementen ausgefüllt ist, besteht auch bei diesem Dachsystem ein hohes Maß an Einbruchsicherheit, eine geringe Geräuschübertragung in den Innenraum sowie eine gute Wärmedämmung. Ein weiterer Vorteil liegt darin, daß die von der Außenhaut überspannte Außenseite der einzelnen Dachelemente nicht sichtbar ist, so daß auf die Gestaltung der Außenseite im Gegensatz zu herkömmlichen Lamelldendächern mit sichtbarer Außenseite weniger Aufwand verwendet werden muß, insbesondere auf kostenintensive, lackierte Oberflächen verzichtet werden kann, und statt dessen die Lamellen nach reinen Zweckmäßigkeitserwägungen entworfen werden können. Schließlich werden auch die Gestaltungsmöglichkeiten des Innenraums verbessert, weil der Innenhimmel auf der dem Fahrzeuginnenraum zugewandten Innenseite der Dachelemente keine wasserleitende Funktion mehr übernehmen muß, so daß auf eine größere Stoffauswahl zurückgegriffen werden kann, die vornehmlich unter ästhetischen Gesichtspunkten durchgeführt werden kann.

Die Außenhaut ist vorteilhaft mit den Dachelementen fest verbunden, so daß die Überführung der Dachelemente von Schließstellung in Öffnungsstellung zwangsläufig auch von der Außenhaut ausgeführt wird. Um bei der Überführung in Öffnungsstellung des Dachsystems eine Relativbewegung der Lamellen bzw. Dachelemente zueinander zu ermöglichen, ist die Außenhaut in der translatorischen Verstellrichtung - üblicherweise die Fahrzeuglängsrichtung - jeweils nur etwa zur Hälfte mit jedem einzelnen Dachelement verbunden, um sicherzustellen, daß ohne Spannungen in der Außenhaut der translatorische Abstand zwischen den Dachelementen verkürzt werden kann. Der Bereich, über den die Außenhaut fest mit den Dachelementen verbunden ist, hängt von der Kinematik und der Geometrie der Dachelemente ab, wobei gewährleistet sein soll, daß in Öffnungsstellung der Dachelemente die Außenhaut zwischen benachbarten Dachelementen einen wasserführenden Kanal bildet und außerdem unter Spannung stehen soll, damit Stoffflattern verhindert werden kann. Die definierte Faltenbildung sowie die Erzeugung der Stoffspannung können gegebenenfalls über ein an der Außenhaut angreifendes Spannelement erzeugt werden.

In Schließstellung sind die Dachelemente bevorzugt vollständig von der Außenhaut überdeckt, wodurch gleichzeitig auch die Dachöffnung vollständig von der Außenhaut abgedeckt ist. In dieser Ausführung werden Dichtelemente lediglich entlang der Kante der Dachöffnung benötigt.

Ausführungsbeispiele des Erfindungsgegenstandes werden an Hand von Zeichnungen beschrieben. Es zeigen:
- Fig. 1a: ein Dachsystem mit einer Mehrzahl hintereinander angeordneter Dachelemente und einer auf der Außenseite der Dachelemente aufgespannten Außenhaut, dargestellt in Schließstellung,
- Fig. 1b: das Dachsystem in einer Zwischenstellung zwischen Schließstellung und Öffnungssteilung,
- Fig. 1c: das Dachsystem in Öffnungsstellung mit schräg gestellten Dachelementen,
- Fig. 2a: ein Dachsystem in einer modifizierten Ausführung, dargestellt in Schließstellung,
- Fig. 2b: das Dachsystem gemäß Fig. 2a in Öffnungsstellung.

Bei den folgenden Ausführungsbeispielen sind gleiche Bauteile mit gleichen Bezugszeichen versehen.

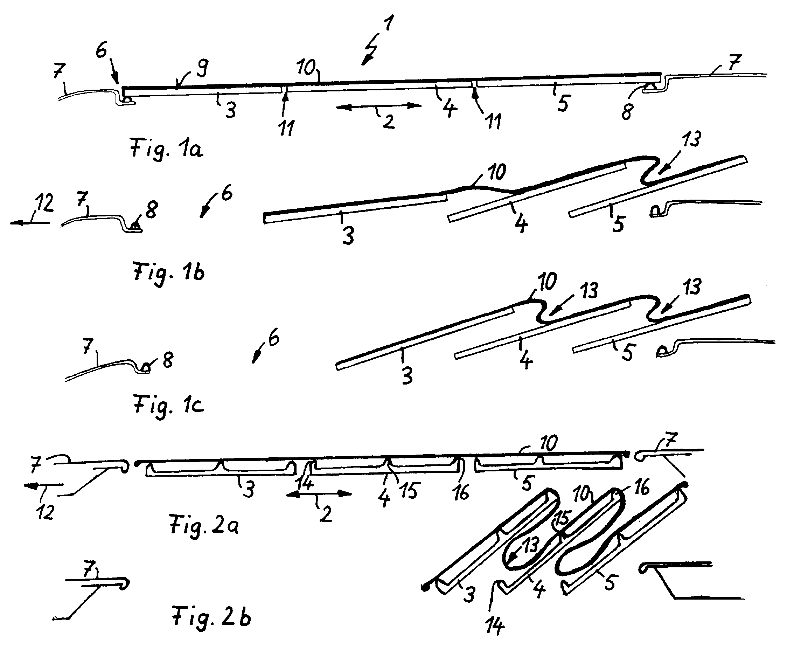

Das in Fig. 1a dargestellte Dachsystem 1 als Bestandteil eines Fahrzeugdaches eines Kraftfahrzeugs besteht aus einer Mehrzahl von in Fahrzeuglängsrichtung 2 hintereinander angeordneter Lamellen bzw. Dachelemente 3, 4, 5, die in einer Dachöffnung 6 im Fahrzeugdach 7 zwischen der in Fig. 1a dargestellten Schließstellung und der in Fig. 1c dargestellten Öffnungsstellung verstellbar sind. Im Bereich der der Dachöffnung 6 zugewandten, umlaufenden Kante des Fahrzeugdaches 7 ist ein umlaufendes Dichtelement 8 angeordnet, über das in Schließstellung des Dachsystems 1 ein wasserdichter Abschluß zwischen den Dachelementen 3, 4, 5 und dem Fahrzeugdach 7 herstellbar ist.

Die Dachelemente 3, 4, 5 sind auf ihrer dem Fahrzeuginnenraum abgewandten Außenseite 9 von einer wasserdichten, faltbaren Außenhaut 10 überzogen. Die Außenhaut 10 überdeckt vollständig sämtliche Dachelemente 3, 4, 5 und ist vorteilhaft einteilig und ohne Durchbrechungen ausgebildet, wodurch gewährleistet ist, daß Spaltmaße 11 zwischen angrenzenden Dachelementen vollständig von der wasserdichten Außenhaut überdeckt sind, so daß keine Gefahr besteht, daß Wasser in den Fahrzeuginnenraum eindringt.

Die Außenhaut 10 ist fest mit jedem einzelnen Dachelement 3, 4, 5 verbunden, jedoch in Fahrzeuglängsrichtung 2 gesehen nur über einen beschränkten Abschnitt jedes Dachelementes. Wie den Fig. 1b und 1c zu entnehmen, ist der der Fahrzeugvorderseite 12 benachbarte Abschnitt der auf das vorderste Dachelement 3 nachfolgenden Dachelemente 4 und 5 ohne feste Verbindung zur Außenhaut 10 ausgebildet, damit bei einer Schrägstellung der Dachelemente die hierbei entstehende Lücke zwischen benachbarten Kanten der Dachelemente von der Außenhaut 10 ohne Rißgefahr überbrückt werden kann.

Die Verbindung zwischen Außenhaut und Dachelementen kann durch Formschluß, Kraftschluß oder Stoffschluß oder eine Mischform erfolgen. Die Verbindung kann unlösbar, beispielsweise durch Kleben, oder lösbar ausgebildet sein, beispielsweise durch Klemmen, Einklipsen oder ähnliches, wobei eine lösbare Verbindung insbesondere unter Verwendung von Halteleisten oder Spriegel realisiert werden kann.

In Schrägstellung der Dachelemente bildet sich zwischen aufeinanderfolgenden Dachelementen eine Falte 13, die die Funktion einer Wasserrinne übernimmt, über die eintropfendes Wasser zum Seitenrand der Dachöffnung abgeleitet werden kann. In Öffnungsstellung des Dachsystems (Fig. 1c) ist zwischen jeweils zwei aufeinanderfolgenden Dachelementen eine Falte 13 gebildet.

Es kann aber auch zweckmäßig sein, die Außenhaut elastisch auszubilden, damit in Öffnungsstellung die Außenhaut mit Spannung auf den Dachelementen aufliegt und Flattern verhindert wird.

Auf der dem Fahrzeuginnenraum zugewandten Innenseite der Dachelemente 3, 4, 5 kann ein Innenhimmel vorgesehen sein, der in entsprechender Weise wie die Außenhaut teilweise mit der Innenseite der Dachelemente verbunden ist.

Die Dachelemente sind zweckmäßig aus Magnesium, Aluminium oder aus Blech gefertigt.

Im Ausführungsbeispiel nach den Fig. 1a bis 1c sind die Dachelemente 3, 4, 5 plattenförmig mit ebener Außenseite und ebener Innenseite ausgebildet. Dagegen weisen die Dachelemente gemäß dem Ausführungsbeispiel nach Fig. 2a, 2b eine Außenseite mit Querrippen 14, 15, 16 auf, welche sich quer zur Fahrzeuglängsrichtung 2 erstrecken. Das der Fahrzeugvorderseite 12 benachbarte erste Dachelement 3 ist über alle Querrippen fest mit der Außenhaut 10 verbunden. Dagegen sind die dem ersten Dachelement folgenden Dachelemente 4, 5 jeweils nur mit ihrer mittleren und ihrer der Fahrzeugvorderseite 12 abgewandten hinteren Querrippe 15, 16 fest mit der Außenhaut 10 verbunden, um die bereits beschriebene Faltenbildung in Öffnungsstellung mit der Falte 13 zwischen benachbarten Dachelementen zu ermöglichen. Die mittlere Querrippe 15 unterteilt die Dachelemente in zwei gleiche Hälften, so daß das zweite und jedes weitere Dachelement über die halbe Oberfläche mit der Außenhaut 10 verbunden ist.

## Patentansprüche

1. Dachsystem für ein Fahrzeug, mit zumindest zwei benachbarten, in einer Dachöffnung (6) angeordneten Dachelementen (3, 4 und 5), die zwischen einer Schließstellung und einer Öffnungsstellung verstellbar gehalten sind,
**dadurch gekennzeichnet,**
daß auf der dem Fahrzeuginnenraum abgewandten Außenseite (9) eine die Dachelemente (3, 4 und 5) überspannende, faltbare Außenhaut (10) aus wasserabweisendem Material vorgesehen ist.

2. Dachsystem nach Anspruch 1,
**dadurch gekennzeichnet,**
daß die Außenhaut (10) mit den Dachelementen (3, 4 und 5) verbunden ist.

3. Dachsystem nach Anspruch 2,
**dadurch gekennzeichnet,**
daß mindestens ein Dachelement (4 bzw. 5) nur teilweise mit der Außenhaut (10) fest verbunden ist.

4. Dachsystem nach Anspruch 2 oder 3,
**dadurch gekennzeichnet,**
daß die Außenhaut (10) in Fahrzeuglängsrichtung (2) gesehen mindestens zur Hälfte mit zumindest einem Dachelement (3, 4 bzw. 5) verbunden ist.

5. Dachsystem nach einem der Ansprüche 2 bis 4,
**dadurch gekennzeichnet,**
daß das der Fahrzeugvorderseite (12) benachbarte, erste Dachelement (3) über seine gesamte Außenfläche vollständig mit der Außenhaut (10) fest verbunden ist.

6. Dachsystem nach einem der Ansprüche 1 bis 5,
**dadurch gekennzeichnet,**
daß in Schließstellung die Dachöffnung (6) vollständig von den Dachelementen (3, 4 und 5) ausgefüllt ist.

7. Dachsystem nach einem der Ansprüche 1 bis 6,
**dadurch gekennzeichnet,**
daß in Schließstellung die Dachelemente (3, 4 und 5) vollständig von der Außenhaut (10) überdeckt sind.

8. Dachsystem nach einem der Ansprüche 1 bis 7,
**dadurch gekennzeichnet,**
daß auf der dem Fahrzeuginnenraum zugewandten Innenseite der Dachelemente (3, 4 und 5) ein Innenhimmel befestigt ist.
